# EUROPÄISCHE PATENTSCHRIFT

(11) **EP 3 146 532 B1**
(45) Veröffentlichungstag und Bekanntmachung des Hinweises auf die Patenterteilung: **09.09.2020**
(21) Anmeldenummer: 14792522.6
(22) Anmeldetag: 31.10.2014
(51) Int. Cl.: H01B 3/30, H02K 3/30, H02K 3/40

(54) **LACKDRAHT, WICKELKÖRPER UND VERFAHREN ZUR HERSTELLUNG EINES LACKDRAHTES**
ENAMELED WIRE, COIL MEMBER, AND METHOD FOR PRODUCING AN ENAMELED WIRE
FIL ÉMAILLÉ, CORPS D'ENROULEMENT ET PROCÉDÉ DE PRODUCTION D'UN FIL ÉMAILLÉ

(30) Priorität: 20.05.2014 DE 102014107117
(43) Veröffentlichungstag der Anmeldung: 29.03.2017
(73) Patentinhaber: Schwering & Hasse Elektrodraht GmbH, 32676 Lügde (DE)
(72) Erfinder: REICHER, Johann, 31848 Bad Münder (DE); HAASE, Roxana, 31812 Bad Pyrmont (DE)
(74) Vertreter: Rohmann, Michael
(86) Internationale Anmeldenummer: PCT/EP2014/073473
(87) Internationale Veröffentlichungsnummer: WO 2015/176783

(56) Entgegenhaltungen:
- WO-A1-03/056575
- WO-A1-2012/020067
- DATABASE WPI Week 198327 Thomson Scientific, London, GB; AN 1983-703491 XP002734912, & JP S58 91728 A (DAIKIN KOGYO KK) 31. Mai 1983 (1983-05-31)

## Beschreibung

Die Erfindung betrifft einen Lackdraht, mit einem Metalldraht, insbesondere mit einem Kupferdraht, wobei der Metalldraht mit einem elektrisch isolierenden Lack (Elektroisolierlack) beschichtet ist, wobei der Lack bzw. Elektroisolierlack zumindest ein Lackpolymer enthält. Die Erfindung betrifft weiterhin einen Wickelkörper, insbesondere eine Spule oder dergleichen, wobei der Wickelkörper zumindest eine Wicklung, bevorzugt mehrere Wicklungen eines Lackdrahtes aufweist. Fernerhin betrifft die Erfindung ein Verfahren zur Herstellung eines Lackdrahtes. Es liegt im Rahmen der Erfindung, dass der mit dem elektrisch isolierenden Lack beschichtete Metalldraht bzw. der Wickelkörper aus diesem beschichteten Metalldraht mit einer Sekundärisolationsbeschichtung - insbesondere in Form eines Kunstharzes - beschichtet wird.

Lackdrähte und Wickelkörper aus Lackdrähten der vorstehend beschriebenen Art sind aus der Praxis in verschiedenen Ausführungsvarianten bekannt. Die elektrisch isolierende Lackbeschichtung weist zumindest ein Lackpolymer bzw. zumindest ein modifiziertes Lackpolymer auf. Es ist weiterhin bekannt, auf diesen mit dem elektrisch isolierenden Lack beschichteten Metalldraht bzw. Lackdraht eine Sekundärisolationsbeschichtung - insbesondere in Form eines Kunstharzes - aufzubringen. Die bekannten Lackdrähte bzw. Wickelkörper weisen in der Regel den Nachteil auf, dass die chemische Beständigkeit der Oberfläche der Lackbeschichtung zu wünschen übrig lässt. Bei den Beschichtungen bzw. Lackbeschichtungen solcher Lackdrähte ist man zunächst bemüht, eine gute Verarbeitbarkeit der Beschichtung zu erreichen. Dazu ist eine Herabsetzung der Oberflächenenergie des Materials vorteilhaft. Andererseits bedingt eine solche herabgesetzte Oberflächenenergie eine relativ schlechte Haftung der anschließend aufgebrachten Sekundärisolationsbeschichtung. Um dieses Problem zu lösen, hat man bereits zwischen der Lackbeschichtung (Primärisolation) und der Sekundärisolationsbeschichtung einen Haftvermittler zwischengeschaltet. Diese Verfahrensweise hat grundsätzlich zu guten Ergebnissen geführt. Nichtsdestoweniger bedeutet die Verwendung eines Haftvermittlers einen zusätzlichen Materialaufwand.

Der Erfindung liegt das technische Problem zugrunde, einen Lackdraht der eingangs genannten Art anzugeben, bei dem eine optimale chemische Beständigkeit der Außenoberfläche der Lackbeschichtung erreicht werden kann und bei der weiterhin eine hervorragende Haftung einer auf die Lackbeschichtung (Primärisolation) aufgebrachten Sekundärisolationsbeschichtung erzielt wird. Der Erfindung liegt fernerhin das technische Problem zugrunde, einen Wickelkörper aus einem solchen Lackdraht anzugeben, sowie ein Verfahren zur Herstellung eines Lackdrahtes.

Zur Lösung dieses technischen Problems lehrt die Erfindung zunächst einen Lackdraht, - mit einem Metalldraht, insbesondere mit einem Kupferdraht, wobei der Metalldraht bzw. Kupferdraht mit einem elektrisch isolierenden Lack (Elektroisolierlack) beschichtet ist, wobei der Lack bzw. Elektroisolierlack zumindest ein Lackpolymer enthält, wobei das Lackpolymer vorzugsweise zumindest ein Polymer aus der Gruppe "Polyamidimid, Polyesterimid, Polyesteramidimid, Polyimid, Polyamid, Polyester, Polyurethan" ist, wobei die Außenoberfläche bzw. die äußere Schicht des Lackes ein mit zumindest einem Siloxan bzw. Polysiloxan modifiziertes Lackpolymer aufweist, wobei an der Außenoberfläche des Lackes bzw. an der Außenoberfläche einer äußeren Lackschicht des Lackes Fluoratome aufgrund von Substitution bzw. aufgrund von radikalischer Substitution als Resultat einer Behandlung der Außenoberfläche mit Fluor bzw. Fluorgas gebunden sind.

Es liegt im Rahmen der Erfindung, dass die Fluorierung lediglich in der obersten Atomlage bzw. in den obersten Atomlagen der Außenoberfläche des Lackes bzw. der Außenoberfläche der äußeren Lackschicht des Lackes stattfindet. Fernerhin liegt es im Rahmen der Erfindung, dass durch die Behandlung dieser Außenoberfläche mit elementarem Fluor bzw. mit Fluorgas eine radikalische Substitution der Wasserstoffatome an der Außenoberfläche durch Fluoratome stattfindet. Der Erfindung liegt zunächst die Erkenntnis zugrunde, dass diese fluorierte Außenoberfläche der Lackbeschichtung des erfindungsgemäßen Lackdrahtes eine ausgezeichnete chemische Beständigkeit aufweist.

Eine besonders bevorzugte Ausführungsform des erfindungsgemäßen Lackdrahtes ist dadurch gekennzeichnet, dass der elektrisch isolierende Lack (Elektroisolierlack) in mehreren Schichten auf dem Metalldraht aufgebracht ist und dass die Fluoratome an die Außenoberfläche der äußeren Lackschicht gebunden sind. Die Fluoratome sind bei dieser Ausführungsform somit in der obersten Atomlage bzw. in den obersten Atomlagen der äußeren Lackschicht der Lackbeschichtung des Lackdrahtes vorhanden.

Eine sehr empfohlene Ausführungsform, der im Rahmen besondere Bedeutung zukommt, ist dadurch gekennzeichnet, dass die Außenoberfläche des Lackes bzw. die äußere Schicht des Lackes zumindest ein Polyamidimid als Lackpolymer aufweist. Es empfiehlt sich, dass die Außenoberfläche des Lackes bzw. die äußere Schicht des Lackes zumindest 15 bis 25 Gew.-% Polyamidimid aufweist. Erfindungsgemäß weist die Außenoberfläche des Lackes bzw. die äußere Schicht des Lackes zumindest ein mit zumindest einem Siloxan bzw. Polysiloxan modifiziertes Lackpolymer auf. Dabei handelt es sich empfohlenermaßen um zumindest ein mit zumindest einem Siloxan bzw. Polysiloxan modifiziertes Polyamidimid. Es empfiehlt sich somit, dass die Außenoberfläche des Lackes bzw. die äußere Schicht des Lackes ein Polysiloxan modifiziertes Polyamidimid aufweist. Dabei sind bevorzugt 2 bis 70 Gew.-% Polysiloxan - bezogen auf das Lackpolymer - vorhanden.

Gemäß bevorzugter Ausführungsform der Erfindung beträgt die Dicke des auf den Metalldraht aufgebrachten elektrisch isolierenden Lackes (Elektroisolierlack) 5 µm bis 200 µm. Vorzugsweise beträgt die Dicke der äußeren Schicht des Lackes - bevorzugt die Dicker der äußeren Schicht mit dem Polyamidimid bzw. mit dem Polysiloxan modifizierten Polyamidimid - 2 µm bis 10 µm, bevorzugt 3 µm bis 8 µm.

Es liegt im Rahmen der Erfindung, dass auf die Außenoberfläche bzw. auf die erfindungsgemäß fluorierte Außenoberfläche des Lackes eine Sekundärisolationsbeschichtung - insbesondere in Form eines Kunstharzes - aufgebracht ist. Zweckmäßigerweise wird die Außenoberfläche bzw. die fluorierte Außenoberfläche des Lackes mit einem flüssigen Kunstharz als Sekundärisolationsbeschichtung getränkt.

Gemäß sehr empfohlener Ausführungsform der Erfindung weist die Sekundärisolationsbeschichtung zumindest eine Komponente aus der Gruppe "Polyesterimidharz, Polyesterharz, Silikonharz, silikonhaltiger Kunststoff, Silikonkautschuk, Epoxidharz, Polyester-Melamin modifiziertes Harz, Polyurethan, Alkydharz, Phenolharz" auf.

Gegenstand der Erfindung ist auch ein Wickelkörper, insbesondere eine Spule oder dergleichen, wobei der Wickelkörper vorzugsweise mit einem Wickelkern ausgestattet ist, wobei der Wickelkörper zumindest eine Wicklung, bevorzugt mehrere Wicklungen eines erfindungsgemäßen Lackdrahtes aufweist, wobei der gewickelte Lackdraht mit einer Außenoberfläche ausgestattet ist, die zumindest ein Lackpolymer enthält, wobei die Außenoberfläche ein mit zumindest einem Siloxan bzw. Polysiloxan modifiziertes Lackpolymer aufweist und wobei an dieser Außenoberfläche des Lackes Fluoratome aufgrund von Substitution bzw. aufgrund von radikalischer Substitution als Resultat einer Behandlung der Außenoberfläche mit Fluor bzw. mit Fluorgas gebunden sind. Zweckmäßigerweise sind die Fluoratome an der Außenoberfläche des gewickelten Lackdrahtes vorhanden bzw. sind die Fluoratome an der von außen zugänglichen Außenoberfläche des gewickelten Lackdrahtes vorhanden und bevorzugt lediglich an der von außen zugänglichen Außenoberfläche des gewickelten Lackdrahtes vorhanden. Es liegt im Rahmen der Erfindung, dass die Fluorierung der Außenoberfläche des Lackdrahtes im bereits gewickelten bzw. aufgewickelten Zustand des Lackdrahtes an dem Wickelkörper erfolgt. Dabei kann die Fluorierung in vorteilhafter Weise auch in lediglich kleinen Öffnungen, Poren oder dergleichen der Außenoberfläche erfolgen. Vorzugsweise wird nach dieser Fluorierung der Außenoberfläche bzw. der von außen zugänglichen Außenoberfläche die bereits beschriebene Sekundärisolationsbeschichtung auf den elektrisch isolierenden Lack (Primärisolation) aufgebracht.

Gegenstand der Erfindung ist weiterhin ein Verfahren zur Herstellung eines erfindungsgemäßen Lackdrahtes, wobei zumindest eine Schicht eines elektrisch isolierenden Lackes (Elektroisolierlackes) auf einen Metalldraht - insbesondere auf einen Kupferdraht - aufgebracht wird, wobei die Außenoberfläche bzw. die äußere Schicht des Lackes ein mit zumindest einem Siloxan bzw. Polysiloxan modifiziertes Lackpolymer aufweist, wobei vorzugsweise anschließend der Lackdraht zu einem Wickelkörper gewickelt wird, wobei die Außenoberfläche des mit dem Lack beschichteten - und vorzugsweise gewickelten - Drahtes bzw. Lackdrahtes mit elementarem Fluor bzw. mit Fluorgas behandelt wird, so dass Wasserstoffatome an der Außenoberfläche des Lackes bzw. des zumindest einen Lackpolymers durch Fluoratome substituiert werden. - Nach bevorzugter Ausführungsform des erfindungsgemäßen Verfahrens wird die Fluorierung mit dem elementaren Fluor bzw. mit dem Fluorgas bei einer Temperatur von 15°C bis 30°C und bevorzugt bei Raumtemperatur durchgeführt. Erfindungsgemäß erfolgt die Fluorierung mit dem elementaren Fluor bzw. mit dem Fluorgas bei Unterdruck bzw. im Vakuum. Fluorierung mit Fluorgas meint im Rahmen der Erfindung im Übrigen auch, dass Fluorgas mit zumindest einem anderen Gas - beispielsweise mit Stickstoff - gemischt ist und dieses Gasgemisch zwecks Fluorierung zugesetzt wird.

Nach empfohlener Ausführungsform wird bei dem erfindungsgemäßen Verfahren wie folgt gearbeitet: Die zu fluorierenden mit dem Lackdraht versehenden Wickelkörper werden in eine Vakuumkammer eingeführt. Daraufhin wird die Vakuumkammer evakuiert und im Anschluss daran erfolgt die Behandlung mit Fluorgas. Dabei kann es sich zweckmäßigerweise um ein Gasgemisch aus Fluorgas und zumindest einem weiteren Gas- beispielsweise Stickstoff - handeln. Nach dieser Fluorbehandlung werden zweckmäßigerweise die Prozessgase aus der Kammer abgepumpt. Überschüssiges Fluor kann dabei beispielsweise mit Hilfe von Calciumchlorid zu Calciumfluorid umgesetzt werden. Schließlich werden die fluorierten Wickelkörper aus der Kammer entladen. Dieses Verfahren zeichnet sich in vorteilhafter Weise durch kurze Zykluszeiten aus.

Es liegt im Rahmen des erfindungsgemäßen Verfahrens, dass auf die fluorierte Außenoberfläche des Lackes bzw. des Lackdrahtes eine Sekundärisolationsbeschichtung - insbesondere in Form eines Kunstharzes - aufgebracht wird. Eine besonders bevorzugte Ausführungsform der Erfindung ist dabei dadurch gekennzeichnet, dass sowohl die Fluorierung als auch die anschließende Aufbringung der Sekundärisolationsbeschichtung an dem bereits zu einem Wickelkörper gewickelten Draht bzw. Lackdraht erfolgt. Bevorzugte Komponenten für die Sekundärisolationsbeschichtung wurden bereits weiter oben aufgeführt.

Es liegt im Rahmen der Erfindung, dass die erfindungsgemäß fluorierte Außenoberfläche des Lackdrahtes - insbesondere des zu einem Wickelkörper gewickelten Lackdrahtes - mit einer flüssigen Sekundärisolationsbeschichtung getränkt wird. Zweckmäßigerweise wird ein flüssiges Kunstharz - bevorzugt in Form einer der oben bereits genannten Komponenten - auf die fluorierte Außenoberfläche des Lackdrahtes aufgebracht und die Außenfläche dadurch mit der Sekundärisolationsbeschichtung getränkt. Dabei ergibt sich eine besonders hervorragende Haftung der Sekundärisolationsbeschichtung an der fluorierten Außenoberfläche des Lackdrahtes.

Der Erfindung liegt die Erkenntnis zugrunde, dass sich der erfindungsgemäße Lackdraht, der erfindungsgemäße Wickelkörper und das erfindungsgemäße Verfahren zur Herstellung des Lackdrahtes durch besondere gegenüber den aus dem Stand der Technik bekannten Maßnahmen Vorteile auszeichnen. Zunächst weist die fluorierte Außenoberfläche des elektrisch isolierenden Lackes (Primärisolation) des Lackdrahtes eine überraschend hohe chemische Beständigkeit auf. Durch die Fluorierung der Außenoberfläche wird im Übrigen die Oberflächenenergie der Lackbeschichtung des Lackdrahtes beachtlich erhöht. Aufgrund der Fluorierung wird zunächst eine deutlich verbesserte Benetzbarkeit der Außenoberfläche in Bezug auf die Aufbringung der Sekundärisolationsbeschichtung erzielt. Die Erhöhung der Oberflächenenergie Außenoberfläche bedingt im Übrigen den erheblichen Vorteil, dass die auf die fluorierte Außenoberfläche aufgebrachte Sekundärisolationsbeschichtung besonders optimal auf der Außenoberfläche haftet. Das gilt vor allem auch für den bereits zum Wickelkörper gewickelten und anschließend fluorierten sowie daraufhin mit der Sekundärisolationsbeschichtung versehenen Lackdraht. Der Erfindung liegt insoweit die Erkenntnis zugrunde, dass insbesondere im gewickelten Zustand des Lackdrahtes mittels der erfindungsgemäßen Fluorierung die nach außen hin zugängliche Außenoberfläche des Lackdrahtes sehr vollständig behandelt werden kann, so dass die anschließend aufgebrachte Sekundärisolationsbeschichtung an allen Stellen der Außenoberfläche des gewickelten Lackdrahtes überraschend fest haften kann. Diese Haftung ist deutlich höher als auf nicht fluorierten Außenoberflächen. Hervorzuheben ist auch, dass der erfindungsgemäße Lackdraht auf verhältnismäßig einfache und kostengünstige Weise herstellbar ist. Aufwendige und teure Zusatzmaßnahmen sind dazu nicht erforderlich.

## Patentansprüche

1. Lackdraht, mit einem Metalldraht, insbesondere mit einem Kupferdraht, wobei der Metalldraht mit einem elektrisch isolierenden Lack (Elektroisolierlack) beschichtet ist, wobei der Lack bzw. Elektroisolierlack zumindest ein Lackpolymer enthält, wobei das Lackpolymer vorzugsweise ein Polymer aus der Gruppe "Polyamidimid, Polyesterimid, Polyesteramidimid, Polyimid, Polyamid, Polyester, Polyurethan" ist, wobei die Außenoberfläche bzw. die äußere Schicht des Lackes ein mit zumindest einem Siloxan bzw. Polysiloxan modifiziertes Lackpolymer aufweist, wobei an der Außenoberfläche des Lackes Fluoratome aufgrund von Substitution bzw. aufgrund von radikalischer Substitution als Resultat einer Behandlung der Außenoberfläche mit Fluor bzw. mit Fluorgas gebunden sind.

2. Lackdraht nach Anspruch 1, wobei der elektrisch isolierende Lack in mehreren Schichten auf den Metalldraht aufgebracht ist und wobei die Fluoratome an die Außenoberfläche der äußeren Lackschicht gebunden sind.

3. Lackdraht nach einem der Ansprüche 1 oder 2, wobei die Außenoberfläche des Lackes bzw. die äußere Schicht des Lackes zumindest ein Polyamidimid als Lackpolymer aufweist.

4. Lackdraht nach einem der Ansprüche 1 bis 3, wobei die Außenoberfläche des Lackes bzw. die äußere Schicht des Lackes zumindest ein mit zumindest einem Siloxan bzw. Polysiloxan modifiziertes Polyamidimid aufweist.

5. Lackdraht nach einem der Ansprüche 1 bis 4, wobei die Dicke des auf den Metalldraht aufgebrachten elektrisch isolierenden Lacks (Elektroisolierlack) 5 µm bis 200 µm, vorzugsweise 10 µm bis 100 µm beträgt und wobei vorzugsweise die Dicke der äußeren Schicht des Lackes 2 µm bis 10 µm, bevorzugt 3 µm bis 8 µm beträgt.

6. Lackdraht nach einem der Ansprüche 1 bis 5, wobei auf die Außenoberfläche bzw. auf die fluorierte Außenoberfläche des Lackes (Elektroisolierlackes) eine Sekundärisolationsbeschichtung - insbesondere in Form eines Kunstharzes - aufgebracht ist.

7. Lackdraht nach Anspruch 6, wobei die Sekundärisolationsbeschichtung zumindest eine Komponente aus der Gruppe "Polyesterimidharz, Polyesterharz, Silikonharz, silikonhaltiger Kunststoff, Silikonkautschuk, Epoxidharz, Polyester-Melamin modifiziertes Harz, Polyurethan, Alkydharz, Phenolharz" aufweist.

8. Wickelkörper, insbesondere Spule oder dergleichen, wobei der Wickelkörper vorzugsweise mit einem Wickelkern ausgestattet ist, wobei der Wickelkörper zumindest eine Wicklung, bevorzugt mehrere Wicklungen eines Lackdrahtes - insbesondere eines Lackdrahtes nach einem der Ansprüche 1 bis 6 - aufweist, wobei der gewickelte Lackdraht eine Außenoberfläche aufweist, welche Außenoberfläche zumindest ein Lackpolymer enthält, wobei diese Außenoberfläche ein mit zumindest einem Siloxan bzw. Polysiloxan modifiziertes Lackpolymer aufweist, und wobei an dieser Außenoberfläche des Lackes Fluoratome aufgrund von Substitution bzw. aufgrund von radikalischer Substitution als Resultat einer Behandlung der Außenoberfläche mit Fluor bzw. mit Fluorgas gebunden sind.

9. Wickelkörper nach Anspruch 8, wobei die Außenoberfläche des Lackes bzw. die äußere Schicht des Lackes zumindest ein Polyamidimid als Lackpolymer aufweist und wobei dieses Lackpolymer bzw. dieses Polyamidimid mit zumindest einem Siloxan bzw. Polysiloxan modifiziert ist.

10. Wickelkörper nach einem der Ansprüche 8 oder 9, wobei auf die Außenoberfläche bzw. auf die fluorierte Außenoberfläche des Lackes des gewickelten Lackdrahtes eine Sekundärisolationsbeschichtung - insbesondere in Form eines Kunstharzes - aufgebracht ist.

11. Verfahren zur Herstellung eines Lackdrahtes, insbesondere zur Herstellung eines zu einem Wickelkörper gewickelten Lackdrahtes, wobei zumindest eine Schicht eines elektrisch isolierenden Lackes (Elektroisolierlackes) auf einen Metalldraht - insbesondere auf einen Kupferdraht - aufgebracht wird, wobei die Außenoberfläche bzw. die äußere Schicht des Lackes ein mit zumindest einem Siloxan bzw. Polysiloxan modifiziertes Lackpolymer aufweist, wobei vorzugsweise anschließend der Lackdraht zu einem Wickelkörper gewickelt wird, wobei die Außenoberfläche des mit dem Lack beschichteten - und vorzugsweise gewickelten - Drahtes bzw. Lackdrahtes mit elementarem Fluor bzw. mit Fluorgas behandelt wird, so dass Wasserstoffatome an der Außenoberfläche des Lackes bzw. eines Lackpolymers des Lackes durch Fluoratome substituiert werden, wobei die Fluorierung des Lackdrahtes, insbesondere des zu dem Wickelkörper gewickelten Lackdrahtes, bei Unterdruck bzw. unter Vakuum stattfindet.

12. Verfahren nach Anspruch 11, wobei die Fluorierung der Außenoberfläche des Lackes bei einer Temperatur von 20° C bis 30° Celsius durchgeführt wird.

13. Verfahren nach einem der Ansprüche 11 oder 12, wobei die fluorierte Außenoberfläche des mit dem Lack beschichteten Drahtes - insbesondere des zu einem Wickelkörper gewickelten Drahtes - mit einer Sekundärisolationsbeschichtung, insbesondere nach Anspruch 7, versehen wird.

14. Verfahren nach Anspruch 13, wobei ein flüssiges Kunstharz als Sekundärisolationsbeschichtung auf die fluorierte Außenoberfläche aufgebracht wird.

15. Verfahren nach einem der Ansprüche 13 oder 14, wobei die Sekundärisolationsbeschichtung pulverförmig bzw. als Pulverbeschichtung auf die fluorierte Außenoberfläche aufgebracht wird.

## Claims

1. An enamelled wire with a metal wire, in particular with a copper wire, wherein the metal wire is coated with an electrically insulating varnish, wherein the varnish or electrically insulating varnish contains at least one varnish polymer, wherein the varnish polymer is preferably a polymer from the "polyamide imide, polyester imide, polyester amide imide, polyimide, polyamide, polyester, polyurethane" group, wherein the outer surface or the outer coating of the varnish comprises a varnish polymer modified with at least one siloxane or polysiloxane, wherein fluorine atoms are bonded to the outer surface of the varnish by substitution or radical substitution as a result of a treatment of the outer surface with fluorine or fluorine gas.

2. The enamelled wired according to claim 1, wherein the electrically insulating varnish is applied to the metal wire in multiple coats and wherein the fluorine atoms are bonded to the outer surface of the outer coat of varnish.

3. The enamelled wire according to one of claims 1 or 2, wherein the outer surface of the varnish or the outer coat of varnish comprises at least one polyamide imide as the varnish polymer.

4. The enamelled wire according to one of claims 1 to 3, wherein the outer surface of the varnish or the outer coat of varnish comprises at least one polyamide imide modified with at least one siloxane or polysiloxane.

5. The enamelled wire according to one of claims 1 to 4, wherein the thickness of the electrically insulating varnish applied to the metal wire amounts to 5 µm to 200 µm, preferably 10 µm to 100 µm, and wherein the thickness of the outer coat of varnish is 2 µm to 10 µm, preferably 3 µm to 8 µm.

6. The enamelled wire according to one of claims 1 to 5, wherein a secondary insulation layer - in particular in the form of a synthetic resin - is applied to the outer surface or the fluorinated outer surface of the varnish.

7. The enamelled wire according to claim 6, wherein the secondary insulation coating comprises at least one component from the "polyester imide resin, polyester resin, silicon resin, silicon-containing plastic, silicon rubber, epoxy resin, polyester melamine-modified resin, polyurethane, alkyd resin, phenol resin" group.

8. A winding body, in particular a coil or the like, wherein the winding body is preferably fitted with a winding core, wherein the winding body comprises at least one winding, preferably multiple windings, of an enamel wire - in particular an enamel wire according to one of claims 1 to 6, wherein the wound enamel wire has an outer surface, which outer surface contains at least one enamel polymer, wherein this outer surface has a varnish polymer modified with at least one siloxane or polysiloxane, and wherein fluorine atoms are bonded to this outer surface of the varnish by substitution or radical substitution as a result of a treatment of the outer surface with fluorine or fluorine gas.

9. The winding body according to claim 8, wherein the outer surface of the varnish or the outer coat of varnish has at least one polyamide imide as the varnish polymer and wherein this varnish polymer or this polyamide imide is modified with at least one siloxane or polysiloxane.

10. The winding body according to one of claims 8 or 9, wherein a secondary insulation coating - in particular in the form of a synthetic resin - is applied to the outer surface or to the fluorinated outer surface of the varnish of the wound varnish wire.

11. A method for producing an enamel wire, in particular for producing an enamel wire wound into a winding body, wherein at least one coat of an electrically insulating varnish is applied to a metal wire - in particular to a copper wire, wherein the outer surface or the outer coat of varnish comprises a varnish polymer modified with at least one siloxane or polysiloxane, wherein the enamel wire is preferably wound subsequently into a winding body, wherein the outer surface of the varnish-coated - and preferably wound - wire or enamel wire is treated with elementary fluorine or with fluorine gas, so that hydrogen atoms on the outer surface of the varnish or a varnish polymer of the varnish are substituted by fluorine atoms, wherein the fluorination of the enamelled wire, in particular of the enamelled wire wound into the winding body, takes place at negative pressure or in a vacuum.

12. The method according to claim 11, wherein fluorination of the outer surface of the varnish takes place at a temperature of 20 °C to 30 °C.

13. The method according to one of claims 11 or 12, wherein the fluorinated outer surface of the varnish-coated wire - in particular of the wire wound into a winding body - is provided with a secondary insulation coating, in particular according to claim 7.

14. The method according to claim 13, wherein a liquid synthetic resin is applied to the fluorinated outer surface as the secondary insulation coating.

15. The method according to one of claims 13 or 14, wherein the secondary insulation coating is applied to the fluorinated outer surface in powder form or as a powder coating.

## Revendications

1. Fil émaillé, pourvu d'un fil métallique, notamment d'un fil de cuivre, le fil métallique étant revêtu d'un émail électriquement isolant (émail isolant électrique), l'émail ou l'émail isolant électrique contenant au moins un polymère d'émail, le polymère d'émail étant de préférence un polymère du groupe « polyamide imide, polyester imide, polyesteramide imide, polyimide, polyamide, polyester, polyuréthane », la surface extérieure ou la couche extérieure de l'émail comportant un polymère d'émail modifié avec au moins un siloxane ou un polysiloxane, sur la surface extérieure de l'émail, du fait d'une substitution ou du fait d'une substitution radicale, des atomes de fluor étant liés avec du fluor ou avec gaz fluoré, au résultat d'un traitement de la surface extérieure.

2. Fil émaillé selon la revendication 1, l'émail isolant électrique étant appliqué en plusieurs couches sur le fil métallique et les atomes de fluor étant liés à la surface extérieure de la couche extérieure d'émail.

3. Fil émaillé selon l'une quelconque des revendications 1 ou 2, la surface extérieure de l'émail ou la couche extérieure de l'émail comportant au moins un polyamide imide en tant que polymère d'émail.

4. Fil émaillé selon l'une quelconque des revendications 1 à 3, la surface extérieure de l'émail ou la couche extérieure de l'émail comportant au moins un polyamide imide modifié avec au moins un siloxane ou un polysiloxane.

5. Fil émaillé selon l'une quelconque des revendications 1 à 4, l'épaisseur de l'émail électriquement isolant (émail isolant électrique) appliqué sur le fil métallique étant de 5 µm à 200 µm, de préférence de 10 µm à 100 µm et de préférence, l'épaisseur de la couche extérieure de l'émail étant de 2 µm à 10 µm, de préférence de 3 µm à 8 µm.

6. Fil émaillé selon l'une quelconque des revendications 1 à 5, sur la surface extérieure ou sur la surface extérieure fluorée de l'émail (émail isolant électrique) étant appliqué un revêtement isolant secondaire (notamment sous la forme d'une résine synthétique).

7. Fil émaillé selon la revendication 6, le revêtement isolant secondaire comportant au moins un composant du groupe « résine d'imide de polyester, résine de polyester, résine de silicone, matière plastique siliconée, caoutchouc de silicone, résine époxy, résine modifiée par polyester-mélamine, polyuréthane, résine alkyde, résine phénolique ».

8. Corps d'enroulement, notamment bobine ou similaires, le corps d'enroulement étant équipé de préférence d'un noyau d'enroulement, le corps d'enroulement comportant au moins un enroulement, de préférence plusieurs enroulements d'un fil émaillé (notamment d'un fil émaillé selon l'une quelconque des revendications 1 à 6), le fil émaillé enroulé comportant une surface extérieure, laquelle surface extérieure contient au moins un polymère d'émail, ladite surface extérieure comportant un polymère d'émail modifié avec au moins un siloxane ou un polysiloxane et sur ladite surface extérieure de l'émail, du fait d'une substitution ou du fait d'une substitution radicale, des atomes de fluor étant liés avec du fluor ou avec du gaz fluoré, au résultat d'un traitement de la surface extérieure.

9. Corps d'enroulement selon la revendication 8, la surface extérieure de l'émail ou la couche extérieure de l'émail comportant au moins un polyamide imide en tant que polymère d'émail et ledit polymère d'émail ou ledit polyamide imide étant modifié avec au moins un siloxane ou un polysiloxane.

10. Corps d'enroulement selon l'une quelconque des revendications 8 ou 9, sur la surface extérieure ou sur la surface extérieure fluorée de l'émail du fil émaillé enroulé étant appliqué un revêtement isolant secondaire (notamment sous la forme d'une résine synthétique).

11. Procédé, destiné à fabriquer un fil émaillé, notamment à fabriquer un fil émaillé enroulé en un corps d'enroulement, au moins une couche d'un émail électriquement isolant (émail isolant électrique) étant appliquée sur un fil métallique (notamment sur un fil de cuivre), la surface extérieure ou la couche extérieure de l'émail comportant un polymère d'émail modifié avec au moins un siloxane ou un polysiloxane, de préférence dans la suite, le fil émaillé étant enroulé en un corps d'enroulement, la surface extérieure du fil métallique ou du fil émaillé revêtu de l'émail (et enroulé de préférence) étant traitée avec un fluor élémentaire ou avec un gaz fluoré, de sorte que des atomes d'hydrogène sur la surface extérieure de l'émail ou d'un polymère d'émail de l'émail soient substitués par des atomes de fluor, la fluoration du fil émaillé, notamment du fil émaillé enroulé pour former le corps d'enroulement ayant lieu lors d'une dépression ou sous vide.

12. Procédé selon la revendication 11, la fluoration de la surface extérieure de l'émail étant réalisée à une température de 20° C à 30° Celsius.

13. Procédé selon l'une quelconque des revendications 11 ou 12, la surface extérieure fluorée du fil métallique revêtu de l'émail (notamment du fil métallique enroulé en un corps d'enroulement) étant munie d'un revêtement isolant secondaire, notamment selon la revendication 7.

14. Procédé selon la revendication 13, une résine synthétique liquide étant appliquée en tant que revêtement isolant secondaire sur la surface extérieure fluorée.

15. Procédé selon l'une quelconque des revendications 13 ou 14, le revêtement isolant secondaire étant appliqué sous forme pulvérulente ou de revêtement pulvérulent sur la surface extérieure fluorée.
